# EUROPÄISCHE PATENTSCHRIFT

(11) **EP 1 172 568 B1**
(45) Veröffentlichungstag und Bekanntmachung des Hinweises auf die Patenterteilung: **16.11.2005**
(21) Anmeldenummer: 01111402.2
(22) Anmeldetag: 10.05.2001
(51) Int. Cl.: F16B 12/24, F16B 12/20

(54) **Dübelbolzen einer Verbindungsvorrichtung zum Verbinden zweier Möbelteile**
Connection device dowel to join two furniture parts
Cheville d'un dispositif de connexion pour joindre deux pièces de meuble

(30) Priorität: 14.07.2000 DE 20012368 U
(43) Veröffentlichungstag der Anmeldung: 16.01.2002
(73) Patentinhaber: Hettich-Heinze GmbH & Co. KG, 32139 Spenge (DE)
(72) Erfinder: Küpper, Gerd, 32107 Bad Salzuflen (DE); Geschke, Hans-Jürgen, 12357 Berlin (DE); Brinkmann, Manfred, 32609 Hüllhorst (DE)
(74) Vertreter: Dantz, Jan Henning

(56) Entgegenhaltungen:
- DE-A- 2 043 682
- FR-A- 2 106 883

## Beschreibung

Die vorliegende Erfindung betrifft einen Dübelbolzen zum Verbinden zweier Möbelteile, mit einem Befestigungsteil und einem mit dem Befestigungsteil verbundenen Dübelschaft mit einem Kopfteil.

Verbindungsvorrichtungen zum Verbinden zweier Möbelteile mit einem Dübelbolzen werden im Möbelbau in unterschiedlichsten Ausführungen benötigt. Dies betrifft insbesondere den Dübelbolzen. Zu einer kompletten Verbindungsvorrichtung zum Verbinden zweier Möbelteile wird in jedem Falle aber auch noch ein Befestigungselement benötigt, welches den Kopf des Dübelschaftes hintergreift.

Bei diesem zweiten Befestigungselement handelt es sich in der Regel um ein Bauteil mit exzentrischen Spannkurven, oder um ein mit federnd gelagerten Rastmittel versehendes Bauteil.

Die oben angesprochene benötigte Vielfalt betrifft aber insbesondere den Dübelbolzen selbst.

So werden einerseits Dübelbolzen in den unterschiedlichsten Längen benötigt, andererseits werden Dübel mit unterschiedlich gestalteten Befestigungsteilen benötigt.

Die bekannten Dübelbolzen sind einstückig gefertigt, wie beispielsweise die FR 2 106 883 A zeigt.

Diese einstückige Fertigung bedingt einen großen Aufwand bezüglich der Organisation und Lagerhaltung einer entsprechenden Vielfalt unterschiedlichster Dübelbolzen.

Bei Sonderwünschen aus dem Anwenderbereich ist sogar eine spezielle Anfertigung kleinerer Stückzahlen erforderlich, was naturgemäß mit relativ hohen Kosten verbunden ist.

Der Erfindung liegt die Aufgabe zugrunde, einen Dübelbolzen der gattungsgemäßen Art zu schaffen, der einfach und kostengünstig aus vorgefertigten Bauteilen zu einem hochbelastbaren Dübelbolzen zusammengesetzt ist.

Diese Aufgabe wird erfindungsgemäß dadurch gelöst, dass der Dübelbolzen zweiteilig ausgebildet ist und aus einem separat gefertigten Befestigungsteil sowie einem ebenfalls separat gefertigten Dübelschaft besteht, wobei das Befestigungsteil an seinem dem Dübelschaft zugewandten stirnseitigen Ende eine Ausnehmung aufweist, in welche der Dübelschaft eingesteckt und durch Verformen und/oder Verprägung des die Ausnehmung umgebenden Mantelbereiches des Befestigungsteiles festgelegt ist.

Aus einem großen und demzufolge kostengünstig herstellbaren Standardprogramm unterschiedlichster Befestigungsteile und unterschiedlichster Dübelschäfte können bei Bedarf in weitgehend automatisierter und demzufolge kostengünstiger Herstellungsweise die für einen konkreten Anwendungsfall benötigten Dübelbolzen zusammengefügt werden. Dabei ist als besonders vorteilhaft herauszustellen, daß die Verbindung von Befestigungsteil und Dübelschaft durch eine Kaltverformung erfolgen kann.

Eine besonders innige und feste Verbindung zwischen Befestigungsteil einerseits und Dübelschaft andererseits wird dadurch gefördert, daß die Ausnehmung im Inneren des den Dübelschaft umgreifenden Mantelbereiches des Befestigungsteiles mit einer Riffelung versehen ist.

Sofern ein erfindungsgemäßer Dübelbolzen benötigt wird, an den besonders hohe Anforderungen hinsichtlich der Verdrehsicherheit zwischen Befestigungsteil einerseits und Dübelschaft andererseits gestellt werden, ist nach einem weiteren Ausführungsbeispiel der Erfindung vorgesehen, daß der Dübelschaft zumindest an seinem in die Ausnehmung hineinragenden Ende ebenso wie die Ausnehmung selbst mit einem unrunden Querschnitt versehen ist.

Weitere Merkmale der Erfindung sind Gegenstand weiterer Unteransprüche.

In den beigefügten Zeichnungen sind Ausführungsbeispiele der Erfindung dargestellt, die im folgenden näher beschrieben werden.

Es zeigen:
- Fig. 1a-1d: tabellarische Übersichten über verschiedene Kombinationsmöglichkeiten von aus Einzelteilen hergestellten Dübelbolzen,
- Figur 2: Einzelteile eines erfindungsgemäßen Dübelbolzens vor der endgültigen Montage des Dübelbolzens,
- Figur 3: eine der Figur 2 entsprechende Darstellung nach einem weiteren Ausführungsbeispiel der Erfindung,
- Figur 4: eine Ansicht des aus den Einzelteilen gemäß Figur 2 gefertigten Dübelbolzens,
- Figur 5: eine Ansicht eines Dübelschaftes für einen erfindungsgemäßen Dübelbolzen,
- Fig. 6,7,8: Schnittdarstellungen verschiedener Querschnittsformen des Dübelbolzens nach Figur 5,
- Figur 9: Teilansichten von stirnseitigen Enden von Dübelschäften verschiedener Ausbildung,
- Figuren 10a-10d: Schnittdarstellungen der stirnseitigen Enden der jeweils in Figur 9 in der gleichen Ebene angeordneten Dübelschäfte,
- Figur 11: ein Befestigungsteil eines erfindungsgemäßen Dübelbolzens, teilweise im Schnitt dargestellt,
- Figur 12: eine Ansicht in Richtung des Pfeiles XII in Figur 11,
- Figur 13: einen teilweise im Längsschnitt dargestellten Dübelbolzen gemäß vorliegender Erfindung,
- Figur 14: einen Schnitt nach der Linie XIV in Figur 13,
- Figur 15: eine Ansicht einer auf einen Dübelschaft eines erfindungsgemäßen Dübelbolzens aufschiebbaren Zentrierhülse,
- Figur 16: eine Ansicht in Richtung des Pfeiles XVI in Figur 15,
- Figur 17: eine der Figur 16 entsprechende Ansicht einer Zentrierhülse nach einem weiteren Ausführungsbeispiel der Erfindung.

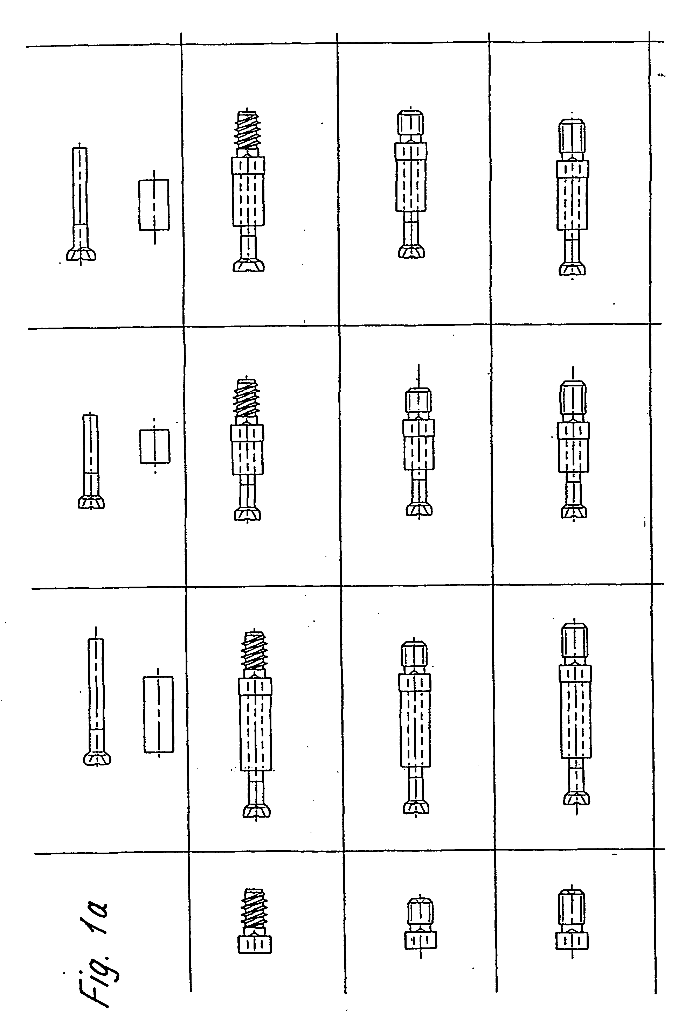

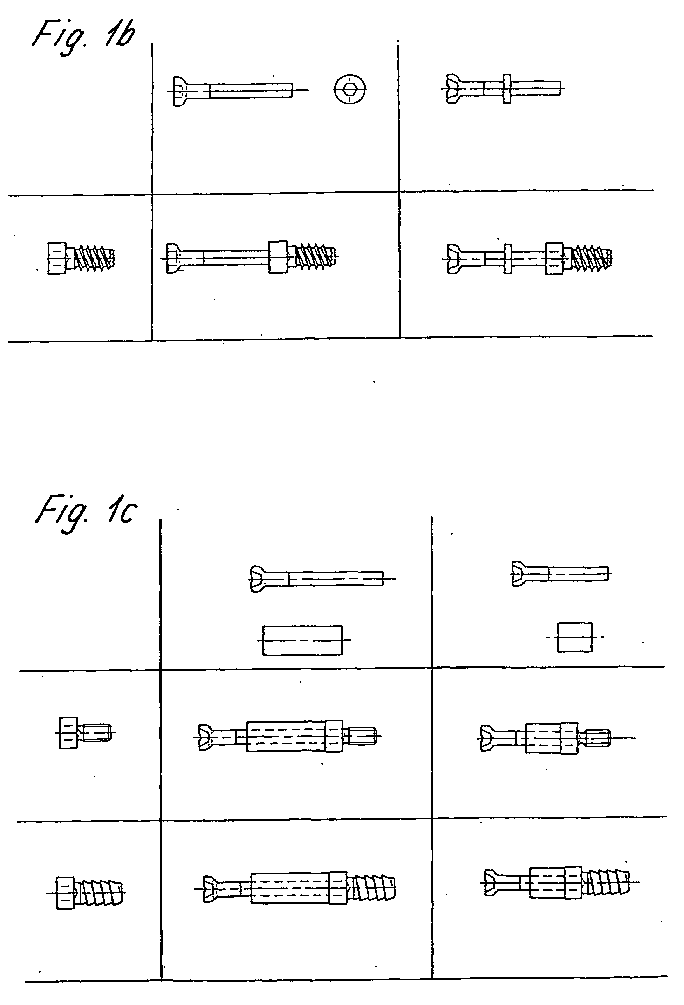

In den Figuren 1a-1d ist in tabellarischer Form aufgezeigt, daß Dübelbolzen einer Verbindungsvorrichtung zum Verbinden zweier Möbelteile gemäß vorliegender Erfindung aus zumindest einem Befestigungsteil und zumindest einem Dübelschaft in verschiedenen Konfigurationen zusammengefügt hergestellt sein können.

Dabei ist in den Figuren 1a-1d in den linksseitigen Spalten jeweils eine mögliche Ausführungsform eines Befestigungsteiles und in den oberen Zeilen jeweils die mögliche Form eines Dübelschaftes gezeigt. Aus den übrigen Feldern der tabellarischen Darstellung ergibt sich dann die jeweils mögliche Kombination.

Diese tabellarische Übersicht soll lediglich verdeutlichen, daß eine sehr große Vielzahl von verschiedenen Dübelbolzen für verschiedenste Anwendungsfälle benötigt und gemäß vorliegender, noch ausführlich zu beschreibender Erfindung problemlos, preiswert und schnell aus unterschiedlichen Komponenten gefertigt werden kann.

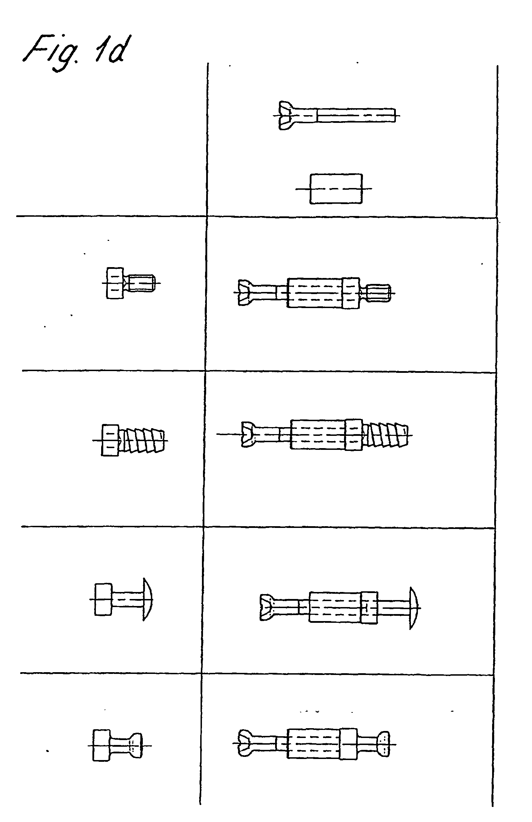

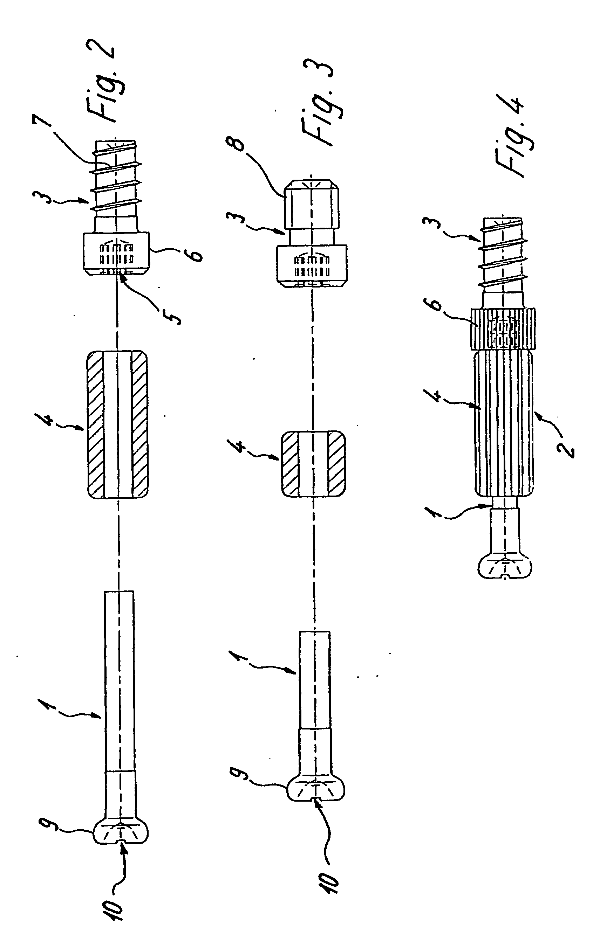

In Figur 2 ist mit dem Bezugszeichen 1 ein Dübelschaft eines Dübelbolzens 2 (siehe Figur 4) bezeichnet, mit dem Bezugszeichen 3 ist ein Befestigungsteil des Dübelbolzens 2 und mit dem Bezugszeichen 4 eine Zentrierhülse bezeichnet, die vor dem Zusammenfügen von Dübelschaft 1 und Befestigungsteil 3 auf den Dübelschaft 1 aufgeschoben wird.

Das Befestigungsteil 3 ist an seinem dem Dübelschaft 1 zugewandten stirnseitigen Ende mit einer Ausnehmung 5 versehen, in die der Dübelschaft 1 eingeführt wird. Anschließend wird der die Ausnehmung 5 umgebende Mantelbereich 6 des Befestigungsteiles 3 verformt und /oder verprägt, so daß der Dübelschaft 1 in der besagten Ausnehmung 5 zumindest kraftschlüssig festgelegt ist.

Der fertige Dübelbolzen 2 gemäß Figur 4 besteht somit aus dem unverlierbar mit dem Befestigungsteil 3 verbundenen Dübelschaft 1 und der auf dem Dübelschaft 1 angeordneten Zentrierhülse 4.

Zurückkommend auf die tabellarische Darstellung unterschiedlicher Kombinationsmöglichkeiten gemäß den Figuren 1a-1d wird nunmehr deutlich, worin der eigentliche Grundgedanke der vorliegenden Erfindung liegt. Es können nämlich in großen Mengen und insoweit äußerst preiswert herstellbare Befestigungsteile 3 verschiedener Konstruktion mit ebenso in großen Mengen und insoweit auch wiederum preiswert herstellbaren, unterschiedlich konzipierten Dübelschäften 1 leicht und problemlos verbunden werden und somit Dübelbolzen 2 für alle denkbaren Anwendungsfälle zur Verfügung gestellt werden.

So zeigt beispielsweise das Ausführungsbeispiel gemäß Figur 2 ein Befestigungsteil 3, welches mit einem selbstschneidenden Gewinde oder einem Holzgewinde 7 ausgestattet ist. Beim Ausführungsbeispiel gemäß Figur 3 hingegen ist ein Befestigungsteil 3 vorgesehen, welches mit einem Gewinde 8 versehen ist, welches in eine (nicht dargestellte) Gewindebuchse eingeschraubt werden kann, die in einem Möbelteil eingelassen ist.

Auch die Längen der Dübelschäfte 1 sind im Ausführungsbeispiel gemäß Figur 2 und 3 unterschiedlich gewählt.

Das gleiche gilt für die Längen der auf den jeweiligen Dübelschaft 1 aufgeschobenen Zentrierhülse 4.

Der jeweils mit einem Kopfteil 9 versehene Dübelschaft 1 kann im Bereich seines Kopfteiles 9 mit unterschiedlichen Werkzeug-Eingriffsöffnungen 10 - beispielsweise in Form eines Schraubendreher-Schlitzes, eines Innensechskantes oder dergleichen - ausgestattet sein.

Die jeweilige Zentrierhülse 4, die vorteilhafterweise aus Kunststoff gefertigt ist, entspricht in ihrem Außendurchmesser dem Innendurchmesser einer Bohrung in einem zweiten Möbelteil, in welche der Dübelschaft 1 hineinragt. Dabei dient die Zentrierhülse 4 einerseits zur Zentrierung der Längsachse des Dübelschaftes 1 innerhalb der besagten Bohrung und andererseits zur Abstützung des Dübelschaftes gegenüber der Innenwandung der besagten Bohrung bei entsprechenden Querbelastungen.

Die Figuren 5-8 machen deutlich, daß der Querschnitt eines Dübelschaftes 1 sowohl kreisrund wie auch mehreckig sein kann.

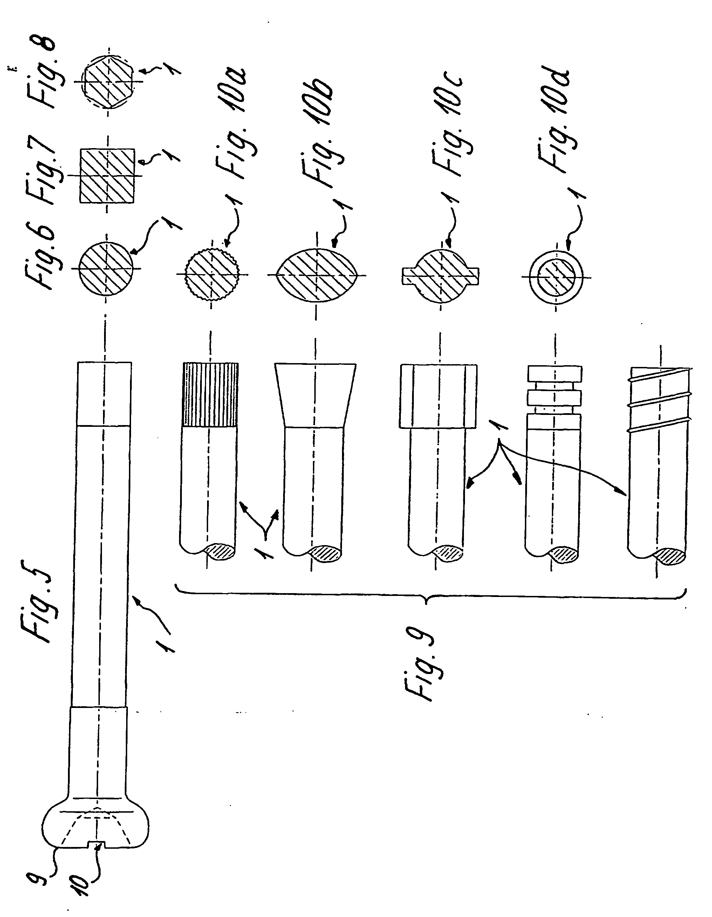

Wird auf einen Dübelschaft 1 mit kreisrundem Querschnitt eine entsprechende Zentrierhülse 4 aufgeschoben, kann diese gegenüber dem Dübelschaft 1 verdreht werden. Dies ist in manchen Anwendungsfällen vorteilhaft. Soll eine Verdrehung der Zentrierhülse 4 auf dem Dübelschaft 1 hingegen vermieden werden, ist die Wahl von mehreckigen Querschnitten gemäß Figuren 7 und 8 vorteilhaft.

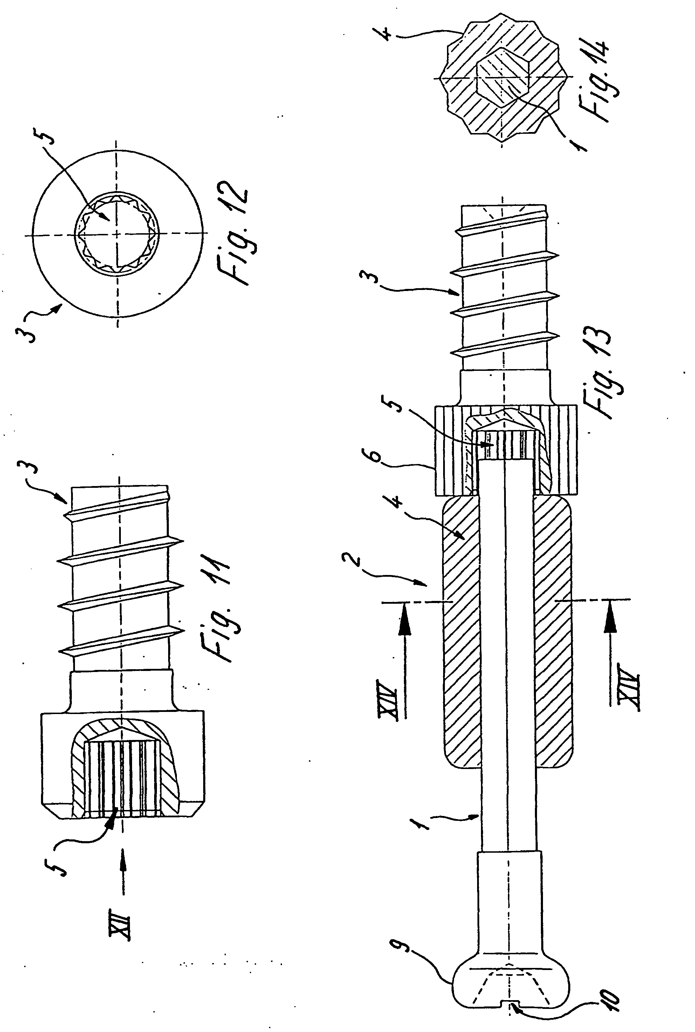

In den Figuren 9 sowie 10a-10d ist angedeutet, daß ein Dübelschaft 1 in seinem stirnseitigen Endbereich, der in eine Ausnehmung 5 eines Befestigungsteiles 3 eingreift, zur Verbesserung der Haltekräfte nach dem Verformen und/oder Verprägen des Mantelbereiches 6 des Befestigungsteiles 3 beispielsweise mit einer Riffelung (Figur 10a) mit einem konisch aufgeweiteten, unrunden Ende (Figur 10b), mit radial vorstehenden Stegabschnitten (Figur 10c), mit Querrillen (Figur 10d) oder mit gewindeähnlichen Stegen (Figur 9, unterste Darstellung) ausgestattet sein kann.

Eine Verbesserung der Verbindung zwischen Dübelschaft 1 und Befestigungsteil 3 kann beispielsweise auch dadurch erfolgen, daß die Ausnehmung 5 des Befestigungsteiles 3 mit einer Riffelung versehen sein kann.

Die Figur 13 zeigt einen Dübelbolzen 2, der mit einem im Bereich der Aufnahmeöffnung 5 geriffelten Befestigungsteil 3 ausgestattet ist.

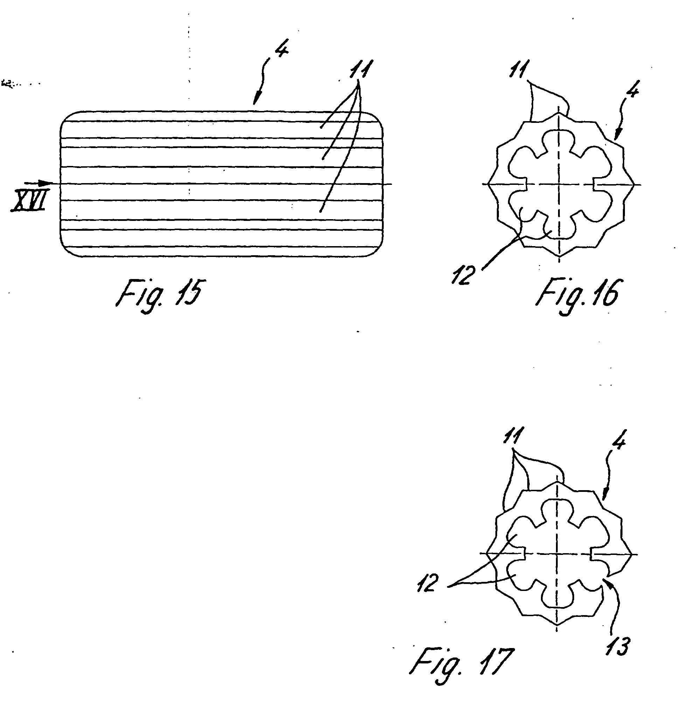

Die Figuren 15-17 zeigen mögliche Ausführungsformen von Zentrierhülsen 4.

Die besagten Figuren 15-17 machen deutlich, daß, insbesondere aus Materialersparnisgründen, derartige Zentrierhülsen 4 sowohl außenseitig wie auch innenseitig mit Längsrillen 11 bzw. 12 ausgestattet sein können.

Figur 17 macht darüber hinaus deutlich, daß eine Zentrierhülse 4 in axialer Richtung durch einen Längsschlitz 13 geöffnet sein kann, so daß die Möglichkeit besteht, eine derart geschlitzte Zentrierhülse 4 auch nach dem Zusammenfügen von Dübelschaft 1 und Befestigungsteil 3 auf einen Dübelschaft 1 aufzuclipsen oder vom Dübelschaft 1 wieder abzunehmen.

Eine wie in Figur 17 dargestellte längs geschlitzte Zentrierhülse 4 kann darüber hinaus auch noch einen gewissen Toleranzausgleich gegenüber der Bohrung, in die der Dübelschaft 1 eingebracht wird, bewirken.

Aus einem Baukastensystem unterschiedlichster Befestigungsteile 3 und unterschiedlichster Dübelschäfte 1 sowie unterschiedlichster Zentrierhülsen 4 kann somit auf einfache Art und Weise ein Dübelbolzen 2 für praktisch jeden denkbaren Anwendungsfall auf einfache Art und Weise äußerst preiswert hergestellt werden.

## Patentansprüche

1. Dübelbolzen(2) einer Verbindungsvorrichtung zum Verbinden zweier Möbelteile, mit einem Befestigungsteil (3) und einem mit dem Befestigungsteil (2) verbundenen Dübelschaft(1) mit einem Kopfteil (9), **dadurch gekennzeichnet, dass** der Dübelbolzen (2) zweiteilig ausgebildet ist und aus einem separat gefertigten Befestigungsteil (2) sowie einem ebenfalls separat gefertigten Dübelschaft (1) besteht, wobei das Befestigungsteil (3) an seinem dem Dübelschaft (1) zugewandten stirnseitigen Ende eine Ausnehmung (5) aufweist, in welche der Dübelschaft (1) eingesteckt und durch Verformen und/oder Verprägung des die Ausnehmung (5) umgebenden Mantelbereiches (6) des Befestigungsteiles (3) festgelegt ist.

2. Dübelbolzen nach Anspruch 1, **dadurch gekennzeichnet, daß** die Ausnehmung (5) im Inneren des den Dübelschaft (1) umgreifenden Mantelbereiches (6) mit einer Riffelung versehen ist.

3. Dübelbolzen nach Anspruch 1 oder 2, **dadurch gekennzeichnet, daß** der Dübelschaft (1) in seinem in die Ausnehmung (5) des Befestigungsteiles (3) hineinragenden stirnseitigen Endes mit einer Riffelung, mit einem gegebenenfalls kegelartig erweiterten, unrunden Querschnitt, mit radial vorstehenden Stegabschnitten, mit Querrillen oder mit gewindeartig umlaufenden Stegen oder dergleichen versehen ist.

4. Dübelbolzen nach einem oder mehreren der Ansprüche 1-3, **dadurch gekennzeichnet, daß** auf dem Dübelschaft (1) eine Zentrierhülse (4) angeordnet ist.

5. Dübelbolzen nach einem oder mehreren der vorhergehenden Ansprüche, **dadurch gekennzeichnet, daß** der Dübelschaft (1) einen runden Querschnitt aufweist.

6. Dübelbolzen nach einem oder mehreren der Ansprüche 1-4, **dadurch gekennzeichnet, daß** der Dübelschaft (1) einen unrunden, vorzugsweise mehreckigen Querschnitt aufweist.

7. Dübelbolzen nach Anspruch 4, **dadurch gekennzeichnet, daß** die Zentrierhülse (4) vor dem Zusammenfügen von Dübelschaft (1) und Befestigungsteil (3) auf den Dübelschaft (1) axial aufgeschoben ist.

8. Dübelbolzen nach Anspruch 4, **dadurch gekennzeichnet, daß** die Zentrierhülse (4) in Längsrichtung geschlitzt und auf den Dübelschaft (1) aufgeclipst ist.

9. Dübelbolzen nach einem oder mehreren der Ansprüche 4, 7 und 8, **dadurch gekennzeichnet, daß** die Zentrierhülse (4) aus Kunststoff hergestellt ist.

10. Dübelbolzen nach einem oder mehreren der Ansprüche 4, 7, 8 oder 9, **dadurch gekennzeichnet, daß** die Zentrierhülse (4) außen- und/oder innenseitig mit Längsrillen (11, 12) versehen ist.

## Claims

1. Dowel pin (2) of a connecting device for connecting two furniture parts, comprising a fastening part (3) and, connected to the fastening part (3), a dowel shaft (1) with a head part (9), **characterized in that** the dowel pin (2) is of two-part design and comprises a separately produced fastening part (3) and a likewise separately produced dowel shaft (1), the fastening part (3) having, at its end facing the dowel shaft (1), a recess (5) into which the dowel shaft (1) is fitted and is secured by deforming and/or compressing the lateral region (6) of the fastening part (3) surrounding the recess (5).

2. Dowel pin according to Claim 1, **characterized in that** the recess (5) is provided with fluting in the interior of the lateral region (6) enclosing the dowel shaft (1).

3. Dowel pin according to Claim 1 or 2, **characterized in that** the dowel shaft (1) is provided, at its end protruding into the recess (5) of the fastening part (3), with fluting, with a non-circular cross section, if appropriate a conically flared cross section, with radially projecting web portions, with transverse grooves or with webs extending around in a threadlike manner, or the like.

4. Dowel pin according to one or more of Claims 1-3, **characterized in that** a centring sleeve (4) is arranged on the dowel shaft (1).

5. Dowel pin according to one or more of the preceding claims, **characterized in that** the dowel shaft (1) has a round cross section.

6. Dowel pin according to one or more of Claims 1-4, **characterized in that** the dowel shaft (1) has a non-circular, preferably polygonal, cross section.

7. Dowel pin according to Claim 4, **characterized in that** the centring sleeve (4) is pushed axially onto the dowel shaft (1) prior to joining together the dowel shaft (1) and fastening part (3).

8. Dowel pin according to Claim 4, **characterized in that** the centring sleeve (4) is slit in the longitudinal direction and clipped onto the dowel shaft (1).

9. Dowel pin according to one or more of Claims 4, 7 and 8, **characterized in that** the centring sleeve (4) is made of plastic.

10. Dowel pin according to one or more of Claims 4, 7, 8 and 9, **characterized in that** the centring sleeve (4) is provided externally and/or internally with longitudinal grooves (11, 12).

## Revendications

1. Cheville (2) d'un dispositif de liaison pour relier deux parties de meuble, avec une partie de fixation (3) et une tige de cheville (1) reliée à la partie de fixation (2), avec une partie de tête (9), **caractérisée en ce que** la cheville (2) est réalisée en deux parties et est constituée d'une partie de fixation (2) fabriquée séparément ainsi que d'une tige de cheville (1) fabriquée également séparément, la partie de fixation (3) présentant, à son extrémité frontale tournée vers la tige de cheville (1), un évidement (5) dans lequel est enfoncée la tige de cheville (1) et qui est fixée, par déformation et/ou estampage de la zone d'enveloppe (6), entourant l'évidement (5), de la partie de fixation (3).

2. Cheville selon la revendication 1, **caractérisée en ce que** l'évidement (5) est pourvu de cannelures à l'intérieur de la zone d'enveloppe (6) entourant la tige de cheville (1).

3. Cheville selon la revendication 1 ou 2, **caractérisée en ce que** la tige de cheville (1) est pourvue, dans son extrémité frontale pénétrant à l'intérieur de l'évidement (5) de la partie de fixation (3), de cannelures, d'une section transversale non circulaire, éventuellement élargie en cône, de portions de nervures faisant saillie radialement, de gorges transversales ou de nervures périphériques de type filet ou similaire.

4. Cheville selon une ou plusieurs des revendications 1 à 3, **caractérisée en ce qu'**une douille de centrage (4) est disposée sur la tige de cheville (1).

5. Cheville selon une ou plusieurs des revendications précédentes, **caractérisée en ce que** la tige de cheville (1) présente une section transversale circulaire.

6. Cheville selon une ou plusieurs des revendications 1 à 4, **caractérisée en ce que** la tige de cheville (1) présente une section transversale non circulaire, de préférence polygonale.

7. Cheville selon la revendication 4, **caractérisée en ce que** la douille de centrage (4) est enfilée axialement sur la tige de cheville (1), avant assemblage de la tige de cheville (1) et de la partie de fixation (3).

8. Cheville selon la revendication 4, **caractérisée en ce que** la douille de centrage (4) est fendue dans la direction longitudinale et clipsée sur la tige de cheville (1).

9. Cheville selon une ou plusieurs des revendications 4, 7 et 8, **caractérisée en ce que** la douille de centrage (4) est fabriquée en matière plastique.

10. Cheville selon une ou plusieurs des revendications 4, 7, 8 ou 9, **caractérisée en ce que** la douille de centrage (4) est pourvue de gorges longitudinales (11, 12) sur son côté extérieur et/ou côté intérieur.
